# EUROPEAN PATENT SPECIFICATION

(11) **EP 3 291 510 B1**
(45) Date of publication and mention of the grant of the patent: **19.02.2025**
(21) Application number: 17188894.4
(22) Date of filing: 31.08.2017
(51) Int. Cl.: H04L 67/12, G05B 23/02

(54) **CHARACTERIZATION OF SINGLE OR MULTIPLE DEVICES IN A SYSTEM**
CHARAKTERISIERUNG EINER ODER MEHRERER GERÄTE IN EINEM SYSTEM
CARACTERISATION DE DISPOSITIFS UNIQUES OU MULTIPLES DANS UN SYSTEME

(30) Priority: 02.09.2016 US 201615255535
(43) Date of publication of application: 07.03.2018
(73) Proprietor: RTX Corporation, Farmington, CT 06032 (US)
(72) Inventor: SOBANSKI, Kurt J., Glastonbury, CT 06033 (US); MANTESE, Joseph V., Ellington, CT 06029 (US)
(74) Representative: Dehns

(56) References cited:
- EP-A1- 2 728 818
- WO-A1-2014/094982
- WO-A1-2015/130563
- US-A1- 2013 335 197

## Description

### BACKGROUND

This disclosure relates to electromagnetic communication and more particularly to the characterization of single or multiple devices in a system.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

Detailed knowledge of gas turbine engine and other machinery operation for control or health monitoring requires sensing systems that need information from locations that are sometimes difficult to access due to moving parts, internal operating environment or machine configuration. The access limitations make wire routing bulky, expensive and vulnerable to interconnect failures. The sensor and interconnect operating environments for desired sensor locations often exceed the capability of the interconnect systems. In some cases, cable cost, volume and weight exceed the allowable limits for practical applications.

Application of electromagnetic sensor technologies to address the wiring constraints faces the challenge of providing reliable communications in a potentially unknown environment with potential interference from internal or external sources.

WO 2015/130563 A1 discloses a control and health monitoring system comprising a control sensing device within a shielded sub-system component and a remote processing unit.

US 2013/335197 A discloses transmission of data from a radio tag to a centralised maintenance system.

### BRIEF DESCRIPTION

Viewed from one aspect the present invention provides a system according to claim 1.

The electrical interface device may be disposed within the sub-system component.

The electrical interface device may be mounted to at least one of an external surface and integrally with the sub-system component.

The device may be configured to communicate over an electromagnetic local area network.

The electromagnetic local area network may operate with a frequency from a K band to a W band.

The shielding may be configured to contain electromagnetic communication signals within the sub-system component.

The remote processing unit may be provided with a first security key and the device may be provided with a second security key.

In response to an exchange of the first security key and the second security key, the device may be configured to provide the electrical interface device data to the remote processing unit.

At least one of the first security key and the second security key may be provided with a unique tag.

The waveguide may include a waveguide transmitter interface that enables electromagnetic signal transmission within a guidance structure to a waveguide transition interface incorporating a transition window.

### BRIEF DESCRIPTION OF THE DRAWINGS

The subject matter which is regarded as the present disclosure is particularly pointed out and distinctly claimed in the claims at the conclusion of the specification. The foregoing and other features and advantages of the present disclosure are apparent from the following detailed description taken in conjunction with the accompanying drawings in which:
FIG. 1 is a cross-sectional view of a gas turbine engine;
FIG. 2 is a schematic view of an example control and health monitoring system including a shielded electromagnetic network in accordance with an embodiment of the disclosure;
FIG. 3 is a schematic view of a communication path through a functional component in accordance with an embodiment of the disclosure;
FIG. 4 is a schematic view of a waveguide in accordance with an embodiment of the disclosure;
FIG. 5 is a schematic view of another waveguide in accordance with an embodiment of the disclosure; and
FIG. 6 is an illustrative flowchart of a method of key exchange.

### DETAILED DESCRIPTION

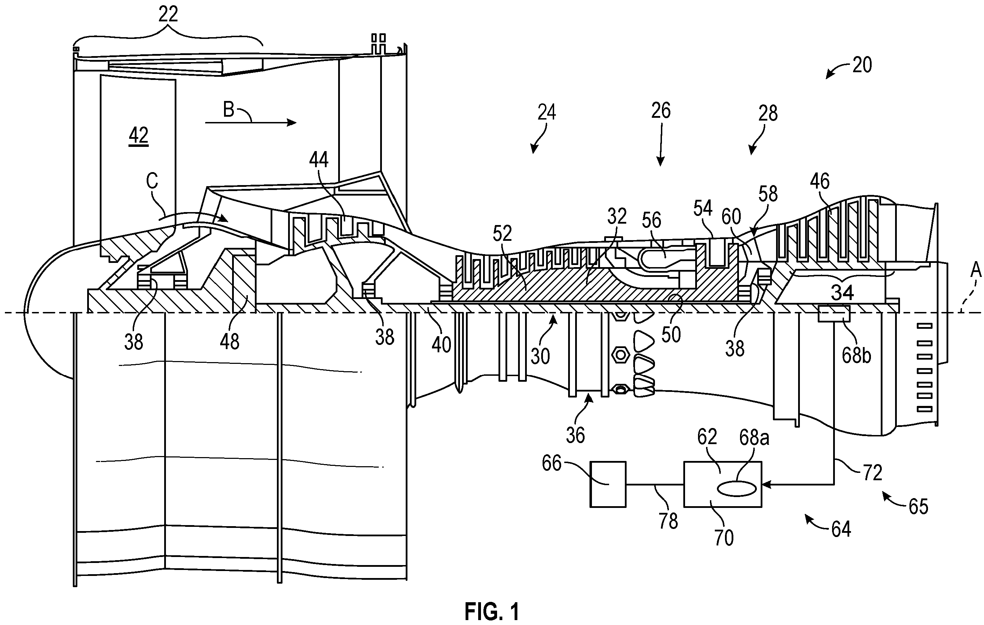

Various embodiments of the present disclosure are related to electromagnetic communication in a machine. FIG. 1 schematically illustrates a gas turbine engine 20 as one example of a machine as further described herein. The gas turbine engine 20 is depicted as a two-spool turbofan that generally incorporates a fan section 22, a compressor section 24, a combustor section 26 and a turbine section 28. Alternative engines may include an augmentor section (not shown) among other systems or features. The fan section 22 drives air along a bypass flow path B in a bypass duct to provide a majority of the thrust, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures or any other machine that requires sensors to operate with similar environmental challenges or constraints. Additionally, the concepts described herein may be applied to any machine or system comprised of control and / or health monitoring systems.

The exemplary engine 20 generally includes a low speed spool 30 and a high speed spool 32 mounted for rotation about an engine central longitudinal axis A relative to an engine static structure 36 via several bearing systems 38. It should be understood that various bearing systems at various locations may alternatively or additionally be provided and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine engine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (about 10,700 metres). The flight condition of 0.8 Mach and 35,000 ft (10,700 m), with the engine at its best fuel consumption - also known as "bucket cruise Thrust Specific Fuel Consumption ('TSFC')" - is the industry standard parameter of Ibm of fuel being burned divided by Ibf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft/second (350 m/s).

The exemplary gas turbine engine includes the fan 42 that comprises in one non-limiting embodiment less than about twenty-six (26) fan blades. In another non-limiting embodiment, the fan section 22 includes less than about twenty (20) fan blades. Moreover, in one disclosed embodiment the low pressure turbine 46 includes no more than about six (6) turbine rotors schematically indicated at 34. In another non-limiting example embodiment the low pressure turbine 46 includes about three (3) turbine rotors. A ratio between the number of fan blades and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of fan blades in the fan section 22 disclose an exemplary gas turbine engine 20 with increased power transfer efficiency.

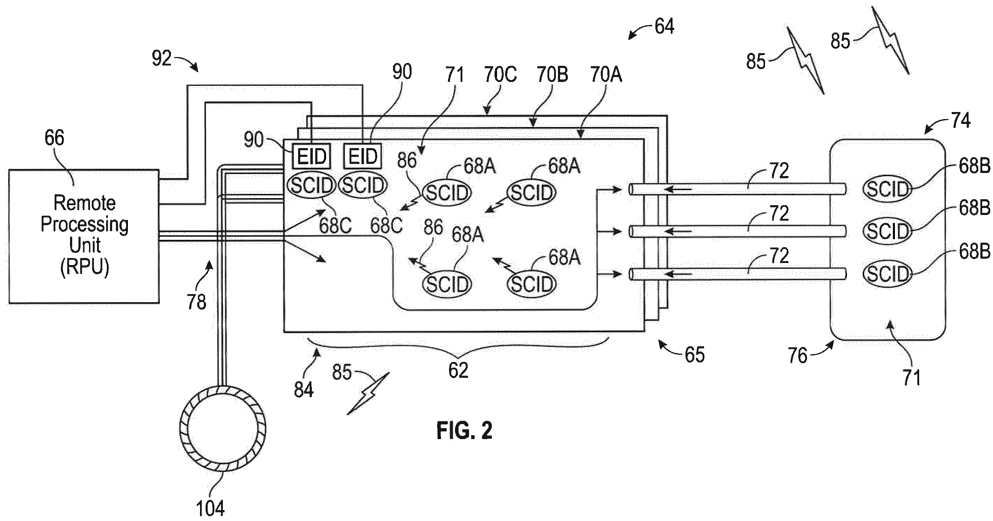

The disclosed gas turbine engine 20 includes a control and health monitoring system 64 (generally referred to as system 64) utilized to monitor component performance and function. In this example, a sensing / control / identification device (SCID) 68A is located within a sub-system component (SSC) 70. The SCID 68A communicates with electromagnetic energy to a remote processing unit (RPU) 66 through a path comprised of a transmission path 78 and a path 62 within a SSC 70 as best seen in FIG. 2. The path may also be extended along one or more shielded paths 72 to SCIDs 68B in separate SSCs 74 (FIG. 2). This entire path (e.g., transmission path 78, path 62, and shielded paths 72) comprises a shielded electromagnetic network (SEN) 65. The SCIDs 68A, 68B, 68C are provided with an embedded wireless (electromagnetic) communication device to enable the SCIDS 68A, 68B, 68C to communicate with the RPU 66. The RPU 66 may transmit signals to a network 71 of the SCID 68A, 68B, 68C (FIG. 2) and/or receive information indicative of current operation of the component being monitored. The transmission media for any portion of the SEN 65 may include solid, liquid or gaseous material. In this example, a pressure internal to the SSC 70 is monitored and that information transmitted through the path 62 of the SEN 65 to the RPU 66 for use in controlling engine operation or monitoring component health. However, it should be understood that it is within the contemplation of this disclosure that the disclosed system 64 may be utilized to control and/or monitor any component function or characteristic of a turbomachine or aircraft component operation and/or other machines.

Prior control & diagnostic system architectures utilized in various applications include centralized system architecture in which the processing functions reside in an electronic control module. Redundancy to accommodate failures and continue system operation systems are provided with dual channels with functionality replicated in both control channels. Actuator and sensor communication is accomplished through analogue wiring for power, command, position feedback, sensor excitation and sensor signals. Cables and connections include shielding to minimize effects caused by electromagnetic interference (EMI). The use of analogue wiring and the required connections limits application and capability of such systems due to the ability to locate wires, connectors and electronics in small and harsh environments that experience extremes in temperature, pressure, and/or vibration.

Referring to FIG. 2, the system 64 includes SEN 65 installed near, in, or on each of several SSCs 70A-C, as examples of the SSC 70 of FIG. 1. Each of the SSCs 70A-C may be an engine component, actuator or any other machine part from which information and communication is performed for monitoring and/or control purposes. In this example, each of the SSCs 70A-C includes a path 62 of the SEN 65 that is the primary means of communicating with one or multiple features of the particular SSC 70A-C or remotely located SSCs 74. The remotely located SSCs 74 may contain a single or multiple electronic circuits or sensors configured to communicate over the SEN 65.

The RPU 66 sends and receives power and data to and from the SSCs 70A-C and may also provide a communication link between different SSCs 70A-C. The RPU 66 may be located on equipment near other system components or located remotely as desired to meet application requirements.

A transmission path (TP) 78 between the RPU 66 and SSCs 70A-C is used to send and receive data routed through the RPU 66 from a control module or other components. The transmission path (TP) 78 is configured as a protected communication channel as part of the SEN 65 between the RPU 66 and the SSCs 70A-C. The TP 78 according to the invention includes a waveguide and may further utilize electrical wire, optic fibre or any other electromagnetic communication including radio frequency / microwave electromagnetic energy, visible or non-visible light. The interface between the TP 78 and SSC 70A-C transmits power and signals received through the TP 78 to one or multiple SCIDs 68A in the example SSC 70A.

The exemplary SCIDs 68A, 68B, 68C may be radio-frequency identification (RFID) devices that include processing, memory and/or the ability to connect to conventional sensors or effectors such as solenoids or electro-hydraulic servo valves. The SSC 70A may contain radio frequency (R/F) antennas, magnetic devices or optic paths designed to be powered and/or communicate to from the TP 78 paths. The SSCs 70A-C may also use shielded paths 72 that can be configured as any type of electromagnetic communication, including, for instance, a radio frequency, microwaves, magnetic or optic waveguide transmission to the SCIDs 68B located within the remotely located SSCs 74.

Shielding 84 within and around the SSC 70A is provided such that electromagnetic energy or light interference 85 with electromagnetic communication signals (wireless communication signals) 86 (shown schematically as arrows) within the SSC 70A are mitigated. Moreover, the shielding 84 provides that the signals 86 are less likely to propagate into the environment outside the SSC 70A and enable unauthorized access to information. Similarly, remotely located SSCs 74 can each include respective shielding 76 to limit signal propagation to shielded paths 72. In some embodiments, confined electromagnetic radiation is in the range 1 - 100 GHz. Electromagnetic radiation can be more tightly confined around specific carrier frequencies, such as 3 - 4.5 GHz, 24 GHz, 60 GHz, or 76 - 77 GHz as examples in the microwave spectrum. A carrier frequency can transmit electric power, as well as communicate information, to multiple SCIDs 68A, 68B, 68C using various modulation and signalling techniques.

RFID, electromagnetic or optical devices implemented as the SCIDs 68A, 68B, 68C may provide information indicative of a physical internal parameter, such as a pressure source, a pressure, a temperature, a speed, proximity, vibration, identification and/or other internal parameters used for monitoring or controlling component operation. The SCIDs 68A, 68B, 68C may also include control devices such as a solenoid, switch or other physical actuation devices. Signals communicated over the TP 78 may employ techniques such as checksums, hash algorithms, shielding and/or encryption to mitigate cyber security threats and interference.

The RFID, electromagnetic or optical devices implemented as the SCIDs 68A, 68B, 68C may be physically collocated with an being operatively connected to the at least one electrical interface device (EID) 90 while both are operatively connected to at least one of the SSCs 70A-C. Alternately, SCIDs 68C may be operatively connected to at least one of the ElDs 90 such that removal of the EID90 would also remove the connected SCID 68C. The at least one EID 90 may be disposed within at least one of the SSCs 70A-C and within the shielding 84. The at least one EID 90 may be mounted to an external surface of or integrally with at least one of the SSCs 70A-C for easier service or removal during field operation.

The SCIDs 68A, 68B, 68C are configured to characterize single or multiple devices in the system 64. More specifically, the SCIDs 68A, 68B, 68C are configured to characterize the EID 90 based on the EID 90 being provided with electrical interface device data. The SCIDs 68A, 68B, 68C may be provided with an on-board memory that is configured to locally retain or store usage data, calibration data (e.g. sensor calibration data, solenoid impedance values over temperature, use characteristics of an electro-hydraulic servo valve, etc.), EID identifying information (e.g. device serial number, device type, etc.), and EID characteristics (e.g. in-service time, total number of cycles, usage information etc.) to characterize the EID 90 or multiple EIDs. The SCIDs 68 are configured to store and associate the calibration data and/or EID characteristics with the EID identifying information.

The on-board memory is operable for storing and retrieving data, including software and/or firmware instructions. Any suitable type of memory storage device may be included, such as random-access memory (RAM) and read-only memory (ROM) Computer-readable storage devices or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions used by the SCIDs 68A, 68B, 68C, the RPU 66, and/or the system 64 in keeping, using, or calibrating the EID 90 based on the calibration data of the EID 90, use characteristics of the EID 90, EID identifying information, and EID characteristics.

The individual EID 90 that is installed into at least one of the SSCs 70A-C is assigned a unique identifier, such as the EID serial number or other EID identifying information at the time of manufacture. The unique identifier is read by the system 64, the RPU 66, or the SCIDs 68A, 68B, 68C. The SCIDs 68A, 68B, 68C may be populated with the calibration data, usage data, EID identifying information, and/or the EID characteristics at time of manufacture and/or during operation and is associated with the unique identifier. Updates of the calibration data and/or the EID characteristics may occur in real time during operation of the system 64 or during repair/overhaul of at least one of the SSCs 70A-C and a remain associated with the unique identifier. Should a replacement EID be installed into at least one of the SSCs 70A-C to replace the individual EID 90, the replacement EID and it's identifier that is different from the unique identifier of the removed device. The another identifier is stored by the system 64, the RPU 66, or the SCIDs 68A, 68B, 68C. The SCIDs 68A, 68B, 68C may be populated with the replacement EID calibration data, replacement EID usage data, replacement EID identifying information, and/or the replacement EID characteristics and is associated with the another identifier. The calibration data, usage data, identifying information, and/or characteristics that are associated with each identifier are stored separately by the system 64, the RPU 66, or the SCID 68A, 68B, 68C. The calibration data, usage data, identifying information, and/or characteristics associated with the unique identifier are updated during operation of the system 64 or during repair/overhaul of at least one of the SSCs 70A-C when the EID 90 is installed. The calibration data, usage data, identifying information, and/or characteristics associated with the another identifier are updated during operation of the system 64 or during repair/overhaul of at least one of the SSCs 70A-C when the replacement EID is installed.

The EID 90 is in communication with the system 64 through an EID interface 92 that is operatively connected to the RPU 66. The EID interface 92 may use electrical, optical, or alternate forms of energy to communicate with the externally mounted (outside of the SSC 70) RPU 66.

The calibration data, usage data, and/or EID characteristics that are associated with the EID identifying information that are stored in the SCIDs 68A, 68B, 68C may be communicated to the RPU 66 via the transmission path 78. The characteristics of the EID 90 stored in the SCIDs 68A, 68B, 68C may be used by the system 64 to identify the ElDs 90 by serial number and reduce uncertainty of EID 90 operation. The storing of the characteristics of the EID 90 may enable the use of the sensor calibration data to reduce sensor error, the stored solenoid impedance values over temperature or use characteristics of an electro-hydraulic servo valve may reduce null bias current shift effects.

The storing and usage of the characteristics of the EID 90 by the SCIDs 68 may enable the EID 90 to be calibrated to provide precise operation of a wide variety of operating ranges and conditions. The storing of the EID characteristics by the SCIDs 68, 68B and associating the EID characteristics with the EID 90 enable the tracking of the EID characteristics by the system 64 without relying on a disconnected database or database that is external to the system 64.

The disclosed system 64 containing the SEN 65 (e.g., transmission path 78, path 62, and shielded paths 72) provides a communication link between the RPU 66 and multiple SSCs 70A-C, 74. The shielding 84, 76 may be provided along the transmission path 78 and for each SSC 70A-C and separate SSC 74 such that power and communication signals are shielded from outside interference, which may be caused by environmental electromagnetic or optic interference. Moreover, the shielding 84, 76 prevents intentional interference 85 with communication at each component. Intentional interference 85 may take the form of unauthorized data capture, data insertion, general disruption and/or any other action that degrades system communication. Environmental sources of interference 85 may originate from noise generated from proximate electrical systems in other components or machinery along with electrostatic fields, and/or any broadcast signals from transmitters or receivers. Additionally, pure environmental phenomena, such as cosmic radio frequency radiation, lightning or other atmospheric effects, could interfere with local electromagnetic communications. Accordingly, the individualized shielding 84, 76 for each of the SSCs 70A-C and separate SSCs 74 prevent the undesired interference with communication. The shielding 84, 76 may be applied to enclosed or semi-enclosed volumes that contain the SCIDs 68A, 68B, 68C.

It should be appreciated that while the system 64 is explained by way of example with regard to a gas turbine engine 20, other machines and machine designs can be modified to incorporate built-in shielding for each monitored or controlled components to enable the use of a SEN. For example, the system 64 can be incorporated in a variety of harsh environment machines, such as an elevator system, heating, ventilation, and air conditioning (HVAC) systems, manufacturing and processing equipment, a vehicle system, an environmental control system, and the like. The disclosed system 64 includes the SEN 65 that enables consistent communication with electromagnetic devices, such as the exemplary SCIDs 68A, 68B, 68C, and removes variables encountered with electromagnetic communications such as distance between transmitters and receiving devices, physical geometry in the field of transmission, control over transmission media such as air or fluids, control over air or fluid contamination through the use of filtering or isolation and knowledge of temperature and pressure.

The system 64 provides for localized transmission to SCIDs 68A, 68B, 68C such that power requirements are reduced. Localized transmission occurs within a shielded volume of each SSC 70A-C, 74 that is designed specifically to accommodate reliable electromagnetic transmission for the application specific environment and configuration. Shielding of localized components is provided such that electromagnetic signals are contained within the shielding 84 for a specific instance of the SSC 70A-C. The system 64 therefore enables communication with one or multiple SCIDs 68A, 68B, 68C simultaneously. The exemplary RPU 66 enables sending and receiving of data between several different SSCs 70A-C and separate SSCs 74. The RPU 66 may be located on the equipment near other system components or located away from the machinery for any number of reasons.

The system 64 provides for a reduction in cable and interconnecting systems to reduce cost and increases reliability by reducing the number of physical interconnections. Reductions in cable and connecting systems further provides for a reduction in weight while enabling additional redundancy without significantly increasing cost. Moreover, additional sensors can be added without the need for additional wiring and connections that provide for increased system accuracy and response. Finally, the embodiments enable a "plug-n-play" approach to add a new SCID, potentially without a requalification of the entire system but only the new component; thereby greatly reducing qualification costs and time.

The TP 78 between the RPU 66 and the SSCs 70A-C utilized to send and receive data from other components may take multiple forms such as electrical wire, optic fibre, radio frequency signals or energy within the visible or non-visible light spectrum. The numerous options for a communication path of the TP 78 enable additional design flexibility. The TP 78 transfers energy to the SSC 70A-C such that one or multiple SCIDs 68A, 68B, 68C can be multiplexed over one TP 78 to the RPU 66.

SCIDs 68A, 68B, 68C may include RFID functionality with processing, memory and/or the ability to connect to conventional sensors. Radio frequency (R/F) antennas, magnetic devices or optic paths within the SSCs 70A-C may be designed to communicate with one or multiple SCIDs 68A, 68B, 68C. Moreover, R/F, magnetic or optic waveguide transmission paths i.e. 72, 78 may be utilized to communicate with individual devices, such as the SCIDs 68A, 68B, 68C or that are locally or remotely located from the SSC 70A-C, 74.

Shielding 84, 76 within and around the SSC 70A-C, 74 substantially prevents electromagnetic energy or light interference with signals and also makes it less likely that signals can propagate into the surrounding environment to prevent unauthorized access to information.

According to embodiments, electromagnetic (EM) communication with the system 64 can be performed through multi-material and functional components including, for instance, fuel, oil, engineered dielectrics and enclosed free spaces. By forming waveguides through existing machine components and using electromagnetic communication for one or more of the TP 78, path 62, and/or shielded paths 72, system contaminants and waveguide size for given frequencies can be reduced.

In embodiments, existing components of the gas turbine engine 20 of FIG. 1 can be used to act as waveguides filled with air, fluids or a specifically implemented dielectric to transmit EM energy for writing and reading to/from EM devices in a Faraday cage protected environment. Use of existing structure can allow waveguide channels to be built in at the time of manufacture by machining passages or additively manufacturing waveguide channels as communication paths. For example, communication paths can be built into the structure of SSCs 70A-C and 74 to guide EM energy through each component. The SSCs 70A-C and 74 may contain gas such as air at atmospheric pressure or any other level, or liquids such as oil or fuel. In any part of the system 64, a dielectric may be employed to resist contamination or to reduce requirements for waveguide dimensions.

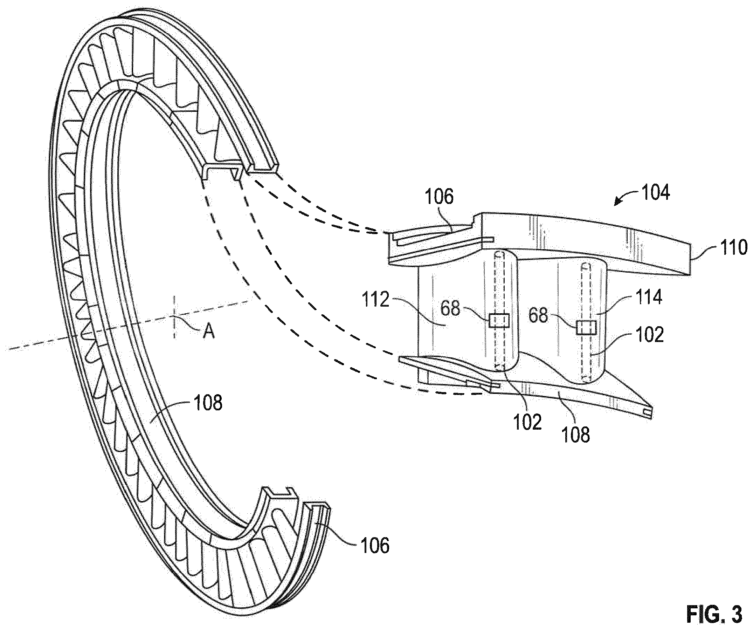

Various machine components are also used for transmission if the proper waveguide geometry is designed into the component, which can also provide functional and structural aspects of the machine. Examples, such as machine housings, fluid (including air) fill tubes, hydraulic lines, support frames and members, internal machine parts and moving parts that can be coupled or shaped into waveguide geometry may also be incorporated in embodiments. As one example, FIG 2. and FIG. 3 depict a plurality of compressor vane segments 104 of the compressor section 24 of FIG. 1 that incorporate one or more communication paths 102 integrally formed in/on a component of the gas turbine engine 20 of FIG. 1. Each communication path 102 routes a portion of electromagnetic signals communicated from the TP 78 to one or more of the SCIDs 68 of FIG. 3. Each communication path 102 also provides a potentially alternate route in which the electromagnetic signal can be channelled in the event of a line or linkage failure, thereby building in inherent redundancy and system level robustness.

In the example of FIG. 3, the compressor vane segment 104 includes an arcuate outer vane platform segment 106 and an arcuate inner vane platform segment 108 radially spaced apart from each other. The arcuate outer vane platform segment 106 may form an outer portion and the arcuate inner vane platform segment 108 may form an inner portion to at least partially define an annular compressor vane flow path.

Communication path 102 in a vane 112 can be formed during a manufacturing process to directly carry electromagnetic signalling of the TP 78 through a component of the gas turbine engine 20 of FIG. 1 directly to a SCID 68 depicted in FIG. 3. Communication path 102 can also terminate with SCIDs 68 to read pressures, temperatures or other parameters at the end of the TP78 or 72. Waveguide usage can enable very low transmission losses such that the RPU 66 of FIG. 2 can be physically located much further away from the SCIDs 68A, 68B, 68C of FIG. 2 than conventional free space transmitting devices. Use of a dielectric in the waveguides can reduce the dimensional requirements for the waveguides and resist contaminants, such as moisture, particles, gases, corrosion and/or liquids that may increase transmission losses. Embodiments can use fluids in existing systems to act as a dielectric, particularly fluids with a dielectric constant that approaches or is better than free space. Thus, existing fuel or oil lines of the gas turbine engine 20 of FIG. 1 may be used as waveguides if they have appropriate dielectric properties.

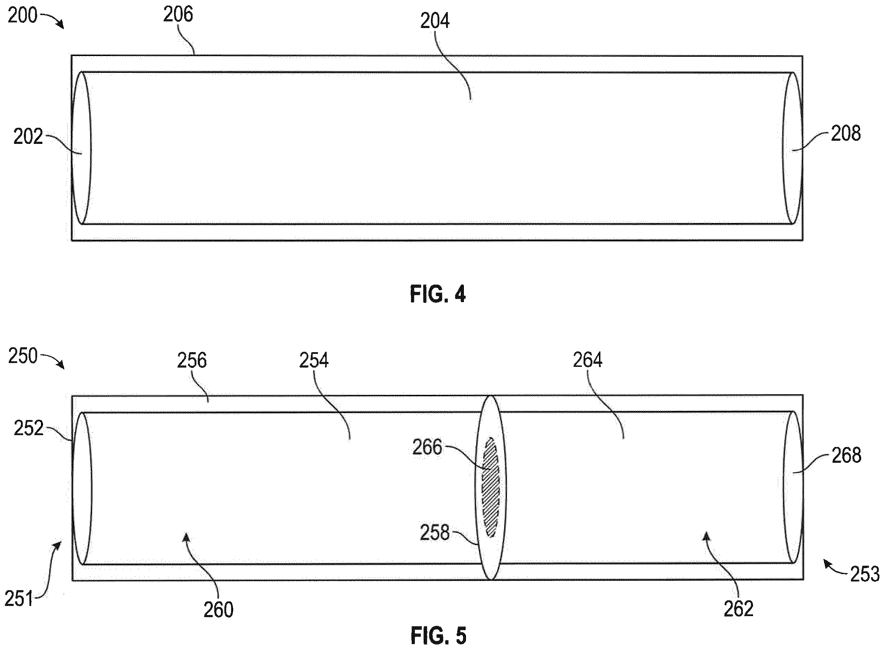

Further embodiments include allowing transition of EM energy from a waveguide into a free space environment. Some of the SSCs 70A-C, 74 of FIG. 2 have multiple SCIDs 68A, 68B, 68C that reside in a protected Faraday cage (e.g., a shielded volume within shielding 84, 76) filled with air or other fluids. Transitioning energy from a waveguide to and from an open cavity is required to prevent unwanted signal loss. Embodiments transition EM energy from TP 78 into a free space environment containing either air or a fluid within shielding 84 of SSC 70A of FIG. 2 using an example waveguide 200 of FIG. 4. The waveguide 200 is part of an embodiment of the TP 78 and optionally of the shielded path 72 of FIG. 2. In some embodiments, EM energy transitions through multiple interfaces having different environmental characteristics, such as waveguide 250 of FIG. 5 as a further example of the shielded path 72 of FIG. 2. Waveguides 200, 250 can connect multiple SCIDs 68 and may pass through existing components, for instance, in communication path 102 of FIG. 3, to facilitate transmission of EM power and signalling between devices. The waveguides 200, 250 may incorporate "T"s, "Y"s, splitters or other branching types to facilitate a network topology.

EM energy may be confined to a waveguide, or alternatively can be transmitted through a combination of waveguide and free space communications in a shielded environment, e.g., within shielding 84, 76 of FIG. 2, to meet system requirements for signal attenuation and disturbances. Waveguide 200 of FIG. 4 can include a waveguide transmitter interface 202 that enables electromagnetic signal transmission within a waveguide medium or electromagnetic window 204 in a guidance structure 206 to a waveguide transition interface 208. The waveguide transmitter interface 202 may be an EM energy emitter, and the waveguide transition interface 208 may be operable to pass the EM energy through shaping, an antenna structure, or an active structure to a confined free space within shielding 84, 76 of FIG. 2. The waveguide medium 204 can be a gas or liquid, such as air, oil, fuel, solid dielectric, or the like. In some embodiments, the waveguide medium 204 is a dielectric. The guidance structure 206 can be a metal tube and may be integrally formed on/within a component of the gas turbine engine 20 of FIG. 1, such as communication path 102 of FIG. 3. In other embodiments, the guidance structure 206 is an outer edge of a dielectric and need not include a metallic structure. Although depicted as a single straight path, it will be understood that the waveguide 200 can bend and branch to reach multiple SCIDs 68A, 68B, 68C of FIG. 2. In other embodiments, the waveguide 200 may take the form of a planar stripline, or trace on a printed circuit board.

Transitioning EM energy from a waveguide to and from cavities using TP 78 and/or shielded paths 72 can present a challenge when SCIDs 68A, 68B, 68C of FIG. 2 are located in higher temperature or pressure environments, especially in environments containing fuel, oil, flammable liquids or the associate vapours. With further reference to FIG. 5, the waveguide 250 enables transitioning of EM energy from a first environment 251 into a second environment 253 with a higher temperature and/or higher pressure capable barrier against fluids or gasses. Waveguide 250 of FIG. 5 can include a waveguide transmitter interface 252 that enables electromagnetic signal transmission within a guidance structure 256 to a waveguide transition interface 258. The waveguide transmitter interface 252 may be an EM energy emitter in the first environment 251. The waveguide transition interface 258 may be operable to pass the EM energy through shaping, an antenna structure, or an active structure from a first portion 260 of the waveguide 250 to a second portion 262 of the waveguide 250. The first portion 260 of the waveguide 250 may have a first waveguide medium 254 that is different from a second waveguide medium 264 of the second portion 262. A transition window 266 can be incorporated in the waveguide transition interface 258 as a dielectric or thin metal EM window operable to pass a frequency range of interest between the first portion 260 and the second portion 262 of the waveguide 250. The second portion 262 of the waveguide 250 can also include a secondary waveguide transition interface 268 in the second environment 253. The secondary waveguide transition interface 268 can act as a seal to prevent higher temperatures and/or pressures of the second environment 253 from directly contacting the first portion 260 of the waveguide 250. The first waveguide medium 254 and the second waveguide medium 264 can be different gasses or liquids, such as air, oil, fuel, or the like and may have different nominal pressures and/or temperatures. In some embodiments, the first waveguide medium 254 and/or the second waveguide medium 264 is a dielectric. The guidance structure 256 can be a metal tube and may be integrally formed on/within a component of the gas turbine engine 20 of FIG. 1, such as communication path 102 of FIG. 3. The guidance structure may also contain more than one waveguide transition interface 258 with a corresponding transition window 266 for redundancy purposes. Although depicted as a single straight path, it will be understood that the waveguide 250 can bend, T, and branch to reach multiple SCIDs 68A, 68B, 68C of FIG. 2.

The disclosed system 64 containing the SEN 65 (e.g., transmission path 78, path 62, and shielded paths 72) may be a protected embedded electromagnetic architecture configured as a R/F multiplexed communication closed communication system that provides a protected communication channel between the RPU 66 and multiple SSCs 70A-C, 74, and the SCIDs 68A, 68B, 68C.

The RPU 66 may be configured to communicate with ElDs 90 through the EID interface 92. Alternately, all communication may be implemented through the SCIDs 68A, 68B, 68C. The RPU 66 is configured to communicate wirelessly with the SCIDs 68A, 68B, 68C through the transmission path 78 and/or the shielded paths 72. An electromagnetic local area network is established that uses various wireless protocols such as radio frequency communication, radar based communication, microwave based communication, etc.

In at least one embodiment, the at least one SCID 68A, 68B, 68C may use architectures or chipsets that are configured to operate at a frequency within the range of 1 GHz to 4 GHz , the K band (18 to 27 GHz), or the W band (75 to 110 GHz). The SCIDs 68A, 68B, 68C may be confined to the 77 to 81 GHz bandwidth. In at least one embodiment, the at least one SCID 68A, 68B, 68C may operate with a frequency from the K band to the W band. By confining the communication of the at least one SCID 68A, 68B, 68Cto the K or W energy band to a microwave channel, wide signal bandwidths may be achieved without concern of multi-system interface. Furthermore, wide signal bandwidths enable multi-node interrogation at high rates.

The protected embedded electromagnetic architecture is an enterprise R/F system that provides various levels of encryption or protocols such that the calibration data, usage data, EID identifying information, and/or the EID characteristics of the associated EID 90 may only be read by the SCIDs 68 or changed/updated by the SCIDs 68 through a key exchange.

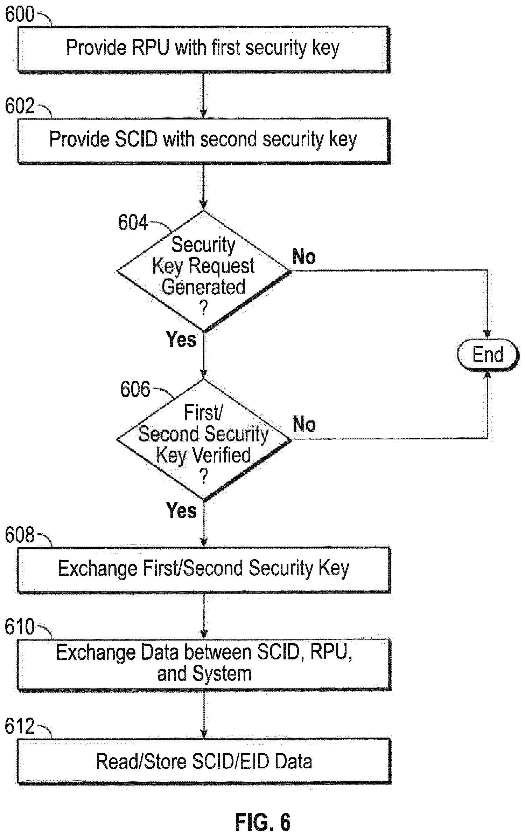

FIG. 6 is an illustrative flowchart of a method of key exchange to enable communication between the RPU 66 and the SCIDs 68A, 68B, 68C. A key exchange may occur between the RPU 66 and the SCIDs 68A, 68B, 68C prior to the reading, changing, or updating of the calibration data, usage data, EID identifying information, and/or the EID characteristics of the associated ElDs 90 by the RPU 66, at least one of the SCIDs 68, and/or the system 64.

At block 600, the RPU 66 may be provided with a first security key. At block 602, the at least one of the SCIDs 68A, 68B, 68C may be provided with a second security key. The first security key and the second security key may be a public / private key pair or a private / private key pair.

The first security key and the second security key may be encryption keys in the form of hardwired coding made at the time of RPU 66 or SCID 68A, 68B, 68C fabrication, physically imprinted by UV light exposure or written on features of the EID 90 or SCID 68A, 68B, 68C by fusing techniques, bit encoding, optical encoding with multi-bit elements, or software protocols. The software protocols may be Diffie-Hellman key exchange protocol, DSS (Digital Signature Standard) that incorporates the Digital Signature Algorithm, ElGamal, various elliptic curve techniques, various password-authenticated key agreement techniques, Paillier cryptosystem, RSA encryption algorithm (PKCS#1), Cramer-Shoup cryptosystem, YAK authenticated key agreement protocol, or the like.

At block 604, a security key request may be generated by the SCID 68A, 68B, 68C, the RPU 66, and/or the system 64. The security key request may be generated in response to a request from at least one of the SCID 68A, 68B, 68C, the RPU 66, and/or the system 64 to use the calibration data of the EID 90, use characteristics of the EID 90, use EID identifying information, or calibrate system based on the calibration data of the EID 90, use characteristics of the EID 90, EID identifying information, and EID characteristics. If a security key request has not been generated, the method may end. Should a security key request be generated, the method continues to block 606.

At block 606, the method verifies whether the first security key of the SCID 68A, 68B, 68C and the second security key is trusted. The first security key may be verified at the RPU 66 communication. The second security key may be verified at the SCID 68A, 68B, 68C. At least one of the first security key and the second security key may be verified by identifying a unique tag associated with at least one of the first security key and the second security key. The unique tag identifies at least one of the first security key and the second security as being provided by a trusted source. The unique tag may also include information as to whether the requesting device is a read/write or read only. If the first security key and/or the second security key is not verified, the method may end. Should the first security key and/or the second security key be verified, the method continues to block 608.

At block 608, the method exchanges the first security key and the second security key. At block 610, electrical interface device data is exchanged between the SCID 68, the RPU 66, and/or the system 64. For example, the SCID 68A, 68B, 68C provides or transfers the EID data or the calibration data of the EID 90, use characteristics of the EID 90, EID identifying information, and/or EID characteristics to the RPU 66 and/or the system 64. At block 612 at least one of the RPU 66, the SCID 68, and/or the system 64 is enabled to read and/or store the calibration data of the EID 90, use characteristics of the EID 90, EID identifying information, and/or EID characteristics based on at least one of the first security key, the second security key, and an encrypted link.

The disclosed system 64 containing the SEN 65 having multiplexed sensors provides many benefits and advantages. The benefits and advantages may include: advanced in-the-loop sensing techniques such as calibrated components and sensors for more precise engine and air vehicle control, lowering the cost and time associated with instrumenting development engines, tracking component inventories and histories, implementing condition based maintenance instead of scheduled maintenance, accurate fault isolation of interconnect and sensor systems, and flexibility for adding or eliminating hardware and software without prolonged certification tasks. Ultimately, the architecture enables lower operating costs for customers.

## Claims

1. A system comprising:
a gas turbine engine (20);
a device (68A, 68B, 68C) disposed within a sub-system component (70A, 70B, 70C) of the gas turbine engine, wherein the device is configured to monitor component performance and function and optionally operates as a control and/or identification device;
a shielding (84) disposed about the sub-system component (70A, 70B, 70C);
a remote processing unit (66) positioned external to the sub-system component (70A, 70B, 70C), the remote processing unit (66) configured to be in electromagnetic communication with the device (68A, 68B, 68C);
a transmission path (78) that extends between the remote processing unit (66) and the sub-system component (70A, 70B, 70C), the transmission path (78) being a protected communication channel for the remote processing unit (66) to communicate with the device (68A, 68B, 68C) through the transmission path (78), wherein the transmission path (78) includes a waveguide (200; 250); and
one or more communication paths (102) integrally formed in/on a component (104) of the gas turbine engine (20), each communication path (102) being arranged to route a portion of electromagnetic signals communicated from the transmission path (78) to the device (68A, 68B, 68C), **characterised by**:
an interface between the transmission path (78) and the subsystem component (70A, 70B, 70C) adapted to transmit power and signals received through the transmission path (78) to the device (68A, 68B, 68C), wherein the communication with the device (68A, 68B, 68C) through the transmission path (78) is via the interface;
an electrical interface device (90), referred to as EID, operatively connected to the sub-system component (70A, 70B, 70C), the EID (90) being operatively connected to and in communication with the device (68A, 68B, 68C), the device (68A, 68B, 68C) being configured to retain identification, calibration or other operational data associated with the EID (90) to characterise the EID (90); and
an EID interface (92) that operatively connects the remote processing unit (66) with the EID (90).

2. The system of claim 1, wherein the EID (90) is disposed within the sub-system component (70A, 70B, 70C).

3. The system of claim 1, wherein the EID (90) is mounted to at least one of an external surface and integrally with the sub-system component (70A, 70B, 70C).

4. The system of claim 1, wherein the device (68A, 68B, 68C) is configured to communicate over an electromagnetic local area network.

5. The system of claim 4, wherein the electromagnetic local area network operates with a frequency from a K band to a W band.

6. The system of claim 5, wherein the shielding (84) is configured to contain electromagnetic communication signals within the sub-system component (70A, 70B, 70C).

7. The system of claim 5, wherein the remote processing unit (66) is provided with a first security key and the device (68A, 68B, 68C) is provided with a second security key.

8. The system of claim 7, wherein in response to an exchange of the first security key and the second security key, the device (68A, 68B, 68C) is configured to provide the EID data to the remote processing unit (66).

9. The system of claim 7 or claim 8, wherein at least one of the first security key and the second security key is provided with a unique tag.

10. The system of any preceding claim, wherein the waveguide (250) includes a waveguide transmitter interface (252) that enables electromagnetic signal transmission within a guidance structure (256) to a waveguide transition interface (258) incorporating a transition window (266).

## Patentansprüche

1. System, umfassend:
ein Gasturbinentriebwerk (20);
ein Gerät (68A, 68B, 68C), das innerhalb einer Subsystemkomponente (70A, 70B, 70C) des Gasturbinentriebwerks angeordnet ist, wobei das Gerät konfiguriert ist, die Leistung und Funktion der Komponente zu überwachen und optional als Steuer- und/oder Identifikationsgerät fungiert;
eine Abschirmung (84), die um die Subsystemkomponente (70A, 70B, 70C) herum angeordnet ist;
eine Remote-Verarbeitungseinheit (66), die außerhalb der Subsystemkomponente (70A, 70B, 70C) positioniert ist, wobei die Remote-Verarbeitungseinheit (66) konfiguriert ist, in elektromagnetischer Kommunikation mit dem Gerät (68A, 68B, 68C) zu stehen;
einen Übertragungspfad (78), der sich zwischen der Remote-Verarbeitungseinheit (66) und der Subsystemkomponente (70A, 70B, 70C) erstreckt, wobei der Übertragungspfad (78) ein geschützter Kommunikationskanal für die Remote-Verarbeitungseinheit (66) ist, um mit dem Gerät (68A, 68B, 68C) über den Übertragungspfad (78) zu kommunizieren, wobei der Übertragungspfad (78) einen Wellenleiter (200; 250) umfasst; und
einen oder mehrere Kommunikationspfade (102), die integral in/auf einer Komponente (104) des Gasturbinentriebwerks (20) ausgebildet sind, wobei jeder Kommunikationspfad (102) so angeordnet ist, dass er einen Teil der vom Übertragungspfad (78) übermittelten elektromagnetischen Signale an das Gerät (68A, 68B, 68C) weiterleitet,
**gekennzeichnet durch**:
eine Schnittstelle zwischen dem Übertragungspfad (78) und der Subsystemkomponente (70A, 70B, 70C), die dazu geeignet ist, Leistung und Signale, die über den Übertragungspfad (78) empfangen werden, an das Gerät (68A, 68B, 68C) zu übertragen, wobei die Kommunikation mit dem Gerät (68A, 68B, 68C) durch den Übertragungspfad (78) über die Schnittstelle erfolgt;
ein elektrisches Schnittstellengerät (90), als EID bezeichnet, das operativ mit der Subsystemkomponente (70A, 70B, 70C) verbunden ist, wobei das EID (90) operativ mit dem Gerät (68A, 68B, 68C) verbunden ist und mit diesem kommuniziert, wobei das Gerät (68A, 68B, 68C) konfiguriert ist, Identifikations-, Kalibrierungs- oder andere Betriebsdaten zu speichern, die mit dem EID (90) assoziiert sind, um das EID (90) zu charakterisieren; und
eine EID-Schnittstelle (92), die die Remote-Verarbeitungseinheit (66) operativ mit dem EID (90) verbindet.

2. System nach Anspruch 1, wobei das EID (90) innerhalb der Subsystemkomponente (70A, 70B, 70C) angeordnet ist.

3. System nach Anspruch 1, wobei das EID (90) an mindestens einer Außenfläche montiert und/oder einstückig mit der Subsystemkomponente (70A, 70B, 70C) ausgebildet ist.

4. System nach Anspruch 1, wobei das Gerät (68A, 68B, 68C) konfiguriert, über ein elektromagnetisches lokales Netzwerk zu kommunizieren.

5. System nach Anspruch 4, wobei das elektromagnetische lokale Netzwerk mit einer Frequenz von einem K-Band bis zu einem W-Band arbeitet.

6. System nach Anspruch 5, wobei die Abschirmung (84) konfiguriert ist, elektromagnetische Kommunikationssignale innerhalb der Subsystemkomponente (70A, 70B, 70C) einzudämmen.

7. System nach Anspruch 5, wobei die Remote-Verarbeitungseinheit (66) mit einem ersten Sicherheitsschlüssel versehen ist und das Gerät (68A, 68B, 68C) mit einem zweiten Sicherheitsschlüssel versehen ist.

8. System nach Anspruch 7, wobei das Gerät (68A, 68B, 68C) in Reaktion auf einen Austausch des ersten Sicherheitsschlüssels und des zweiten Sicherheitsschlüssels konfiguriert ist, die EID-Daten an die Remote-Verarbeitungseinheit (66) bereitzustellen.

9. System nach Anspruch 7 oder Anspruch 8, wobei mindestens einer des ersten Sicherheitsschlüssels und des zweiten Sicherheitsschlüssels mit einer eindeutigen Markierung versehen ist.

10. System nach einem der vorhergehenden Ansprüche, wobei der Wellenleiter (250) eine Wellenleiter-Senderschnittstelle (252) beinhaltet, die eine elektromagnetische Signalübertragung innerhalb einer Führungsstruktur (256) zu einer Wellenleiter-Übergangsschnittstelle (258) ermöglicht, die ein Übergangsfenster (266) enthält.

## Revendications

1. Système comprenant :
un moteur à turbine à gaz (20) ;
un dispositif (68A, 68B, 68C) disposé à l'intérieur d'un composant de sous-système (70A, 70B, 70C) du moteur à turbine à gaz, dans lequel le dispositif est configuré pour surveiller les performances et le fonctionnement du composant et fonctionne éventuellement comme un dispositif de commande et/ou d'identification ;
un blindage (84) disposé autour du composant de sous-système (70A, 70B, 70C) ;
une unité de traitement à distance (66) positionnée à l'extérieur du composant de sous-système (70A, 70B, 70C), l'unité de traitement à distance (66) étant configurée pour être en communication électromagnétique avec le dispositif (68A, 68B, 68C) ;
un chemin de transmission (78) qui se prolonge entre l'unité de traitement à distance (66) et le composant de sous-système (70A, 70B, 70C), le chemin de transmission (78) étant un canal de communication protégé pour que l'unité de traitement à distance (66) communique avec le dispositif (68A, 68B, 68C) à travers le chemin de transmission (78), dans lequel le chemin de transmission (78) comporte un guide d'ondes (200 ; 250) ; et
un ou plusieurs chemins de communication (102) formés d'un seul tenant dans/sur un composant (104) du moteur à turbine à gaz (20), chaque chemin de communication (102) étant agencé pour acheminer une partie des signaux électromagnétiques communiqués depuis le chemin de transmission (78) vers le dispositif (68A, 68B, 68C),
**caractérisé par** :
une interface entre le chemin de transmission (78) et le composant de sous-système (70A, 70B, 70C) conçue pour transmettre l'énergie et les signaux reçus via le chemin de transmission (78) au dispositif (68A, 68B, 68C), dans lequel la communication avec le dispositif (68A, 68B, 68C) via le chemin de transmission (78) s'effectue via l'interface ;
un dispositif d'interface électrique (90), appelé EID, connecté de manière opérationnelle au composant de sous-système (70A, 70B, 70C), l'EID (90) étant connecté de manière opérationnelle et en communication avec le dispositif (68A, 68B, 68C), le dispositif (68A, 68B, 68C) étant configuré pour conserver des données d'identification, d'étalonnage ou d'autres données opérationnelles associées à l'EID (90) pour caractériser l'EID (90) ; et
une interface EID (92) qui connecte de manière opérationnelle l'unité de traitement à distance (66) à l'EID (90).

2. Système selon la revendication 1, dans lequel l'EID (90) est disposé à l'intérieur du composant de sous-système (70A, 70B, 70C) .

3. Système selon la revendication 1, dans lequel l'EID (90) est monté sur au moins une surface externe et de manière solidaire avec le composant de sous-système (70A, 70B, 70C).

4. Système selon la revendication 1, dans lequel le dispositif (68A, 68B, 68C) est configuré pour communiquer sur un réseau local électromagnétique.

5. Système selon la revendication 4, dans lequel le réseau local électromagnétique fonctionne avec une fréquence allant d'une bande K à une bande W.

6. Système selon la revendication 5, dans lequel le blindage (84) est configuré pour contenir des signaux de communication électromagnétique à l'intérieur du composant de sous-système (70A, 70B, 70C).

7. Système selon la revendication 5, dans lequel l'unité de traitement à distance (66) est dotée d'une première clé de sécurité et le dispositif (68A, 68B, 68C) est doté d'une seconde clé de sécurité.

8. Système selon la revendication 7, dans lequel en réponse à un échange de la première clé de sécurité et de la seconde clé de sécurité, le dispositif (68A, 68B, 68C) est configuré pour fournir les données EID à l'unité de traitement à distance (66).

9. Système selon la revendication 7 ou la revendication 8, dans lequel au moins l'une de la première clé de sécurité et de la seconde clé de sécurité est dotée d'une étiquette unique.

10. Système selon une quelconque revendication précédente, dans lequel le guide d'ondes (250) comporte une interface d'émetteur de guide d'ondes (252) qui permet la transmission de signaux électromagnétiques dans une structure de guidage (256) vers une interface de transition de guide d'ondes (258) incorporant une fenêtre de transition (266).
